# EUROPÄISCHE PATENTSCHRIFT

(11) **EP 2 090 500 B1**
(45) Veröffentlichungstag und Bekanntmachung des Hinweises auf die Patenterteilung: **29.09.2010**
(21) Anmeldenummer: 09162089.8
(22) Anmeldetag: 21.03.2006
(51) Int. Cl.: B62D 53/08

(54) **Vorrichtung zum Nachweis und zur Anzeige der Position von Komponenten von Fahrzeugkupplungen**
Device for detecting and displaying the position of components of vehicle couplings
Dispositif de détection et d'indication de la position d'éléments d'attelage d'un véhicule

(30) Priorität: 24.03.2005 DE 102005014977
(43) Veröffentlichungstag der Anmeldung: 19.08.2009
(62) Teilanmeldung aus: 06723569.7
(73) Patentinhaber: Jost-Werke GmbH, 63263 Neu-Isenburg (DE)
(72) Erfinder: Schmidt, Dirk, 65559 Limburg (DE); Saupe, Swen, 55122 Mainz (DE); Strütt, Achim, 64560 Riedstadt (DE); Algüera, José Manuel Gallego, 63739 Aschaffenburg (DE)
(74) Vertreter: Mehler, Klaus

(56) Entgegenhaltungen:
- EP-A1- 0 509 137
- EP-A1- 1 396 417
- US-A- 5 861 802
- US-A- 6 100 794
- US-B1- 6 222 457

## Beschreibung

Die Erfindung betrifft eine Vorrichtung zum Nachweis und zum Anzeigen der Position von Komponenten von Fahrzeugkupplungen, insbesondere von Sattelkupplungen. Die Erfindung bezieht sich auch auf eine Anordnung einer solchen Vorrichtung an der Außenseite von Sattelkupplungen oder von Verschiebeeinrichtungen einer Sattelkupplung.

Aus der DE 102 41 904 A1 ist eine Vorrichtung zur Anzeige des Verschlusszustandes einer Sattelkupplung bekannt, wobei ein erster Sensor im Bereich der Aufnahmeöffnung der Sattelkupplung angeordnet ist und den Königszapfen detektiert und ein zweiter Sensor einen magnetempfindlichen Sensor umfasst, der mit einem an einem Bedienungshebel angebrachten Magneten zusammenwirkt, wobei beide Sensoren auf unterschiedliche Wirkmechanismen beruhen. Diese Sensoren sind an eine Anzeigeeinheit im Führerhaus der Sattelzugmaschine angeschlossen.

Die Signalübertragung sowie die Energieversorgung der Sensoren erfolgt im Regelfall über Kabelsätze und die Signalauswertung über entsprechende Steuerelektroniken. Der Installationsaufwand für solche Systeme ist groß und steht häufig in einem schlechten Verhältnis zum erzielten Effekt, was einer größeren Verbreitung dieser an sich wünschenswerten und der Sicherheit dienenden Ausstattung hinderlich entgegensteht.

Aus der US 6,736,420 B2 ist eine Verschiebevorrichtung für Sattelkupplungen bekannt, die zwei Führungsschienen mit Zahnleisten aufweist, auf denen ein Schlitten verschiebbar gelagert ist, der die Sattelkupplung trägt. Am Schlitten ist eine Verriegelungseinrichtung mit Blockierstücken angeordnet, die in die Zahnleisten eingreifen. Eines der Blockierstücke ist mit einem Öffnungshebel verbunden, der wiederum mit einer Betätigungseinrichtung, z. B. einem Zuggriffhebel zur manuellen Betätigung verbunden sein kann. Auch bei dieser bekannten Verschiebevorrichtung ist es notwendig, dass der Fahrer die ordnungsgemäße Verriegelung des Schlittens visuell kontrolliert bevor er losfährt.

Unabhängig von dem Vorhandensein von Anzeigeeinrichtungen im Fahrerhaus muss der Fahrer vor Beginn der Fahrt eine visuelle Überprüfung des Fahrzeugs, der Sattelkupplung, der Verschlusseinrichtung etc. durchführen.

In der Regel werden mechanische Verschlussanzeigen verwendet, die je nach Ausführung und Lichtverhältnissen besser oder schlechter erkannt werden können. Dies kann den Fahrzeugcheck vor Antritt der Fahrt deutlich erschweren und im Extremfall sogar zu fehlerhaftem Kuppeln führen.

Es ist daher Aufgabe der Erfindung, eine Vorrichtung zum Nachweisen und zum Anzeigen der Position von Komponenten von Fahrzeugkupplungen bereitzustellen, die eine visuelle Überprüfung dieser Komponenten erleichtert.

Diese Aufgabe wird mit einer Vorrichtung gelöst, die gekennzeichnet ist durch eine kombinierte Sensor- und Anzeigeeinheit, die in einem gemeinsamen Gehäuse angeordnet ist, wobei die Sensoreinheit mindestens einen Sensor und die Anzeigeeinheit mindestens ein Anzeigeelement aufweist.

Der Vorteil der Vorrichtung besteht darin, dass ein kompaktes Gerät zur Verfügung gestellt wird, das am Ort der Überprüfung platziert werden kann und dort auch ein vorzugsweise optisches oder akustisches Signal abgibt. Eine aufwendige Verkabelung der Sensoreinheit mit einer im Fahrerhaus angeordneten Anzeigeeinrichtung entfällt. Es wird daher ein kostengünstiges Gerät zur Verfügung gestellt, das an den Stellen problemlos angeordnet werden kann, wo eine Überprüfung durchgeführt werden soll. Die visuelle Überprüfung kann durch den Fahrer im Vorbeigehen erfolgen, ohne dass er zusätzliche Hilfsmittel, wie z. B. Taschenlampen etc. benötigt, um beispielsweise den Verschlusszustand einer Sattelkupplung oder die Position einer Verschiebeeinrichtung zu überprüfen.

Die kombinierte Sensor- und Anzeigeeinheit weist eine eigene Spannungsquelle auf, die vorzugsweise im Gehäuse angeordnet ist. Diese Maßnahme trägt ebenfalls zur universellen Einsetzbarkeit der erfindungsgemäßen Vorrichtung bei. Eine Verkabelung zur Stromversorgung entfällt. Als Spannungsquelle können Batterien, Akkus oder z. B. elektrokinematische Generatoren verwendet werden.

Vorzugsweise weist die kombinierte Sensor- und Anzeigeeinheit eine elektronische Auswerteeinheit auf. Mit dieser Auswerteeinheit kann nicht nur das Sensorsignal dahingehend ausgewertet werden, ob ein Verschlusszustand vorliegt oder nicht (Ja/Nein-Signal), sondern eine solche Auswerteeinheit ermöglicht es auch, den Zustand der Energieversorgung (z. B. Akku oder Batterie) auszuwerten. Vorzugsweise kann die Vorrichtung auch mindestens einen Abstandssensor aufweisen. Mit einer mit einem solchen Abstandssensor ausgerüstete Vorrichtung ist es beispielsweise möglich, an einer Sattelkupplung die korrekte Position eines Aufliegers auf der Sattelkupplung zu überprüfen. Anhand des ermittelten Abstandes von der Vorrichtung zur Unterseite des Aufliegers kann festgestellt werden, ob dieser sich in der vorgeschriebenen Position befindet, in der der Königszapfen in die Verschlusseinrichtung der Sattelkupplung eingreift.

Als Sensoren können induktive Sensoren, Magnetsensoren, Kraftsensoren, Drucksensoren oder Reedsensoren in Betracht kommen. Vorzugsweise arbeiten die Sensoren berührungslos, wobei elektromagnetische Sensoren bevorzugt sind.

Je nach Einsatzort kann der Sensor auch ein Schaltelement, insbesondere ein mechanisches Schaltelement, aufweisen. Eine derartige Ausführung ist beispielsweise zweckmäßig beim Einsatz der erfindungsgemäßen Vorrichtung an Bolzenkupplungen.

Die Anzeigeeinheit weist vorzugsweise ein am Gehäuse angeordnetes optisches Anzeigeelement auf. Dies kann z. B. eine Lampe, insbesondere eine LED-Anzeige sein. Hierbei ist es bevorzugt, wenn dieses optische Anzeigeelement derart am Gehäuse angeordnet ist, dass es entsprechend der Position der Vorrichtung am Fahrzeug beim Vorgehen des Fahrers von diesem problemlos wahrgenommen werden kann.

Die Anzeigeeinheit kann ausschließlich oder zusätzlich ein akustisches Anzeigeelement und/oder ein mechanisches Anzeigeelement aufweisen. Als mechanische Anzeigeelemente kommen Winker, Stifte oder ähnliches in Frage. Bei den akustischen Anzeigeelementen sind Piepser oder Summer bevorzugt. Die Anzeige am Anzeigeelement kann permanent erfolgen, beispielsweise durch ein Dauerlicht oder Dauerton. Die Anzeige kann aber auch nicht permanent ausgelegt sein und z. B. in Form eines Blinklichtes oder dergleichen.

Es ist insbesondere vorgesehen, den Verschlusszustand z. B. einer Sattelkupplung durch ein optisches oder akustisches Signal anzuzeigen. Auch kann es zweckmäßig sein, die Offenstellung signalmäßig anzuzeigen. Welche Art der Anzeige gewählt wird, hängt von der Art der zu detektierenden Position der Fahrzeugkomponente und/oder deren Anordnung am Fahrzeug ab.

Die erfindungsgemäße Anordnung der beschriebenen Vorrichtung sieht vor, dass die Vorrichtung an der Außenseite einer Sattelkupplung oder einer Verschiebeeinrichtung einer Sattelkupplung und benachbart zu einem Handbetätigungselement einer Verschluss- oder Verriegelungseinrichtung angeordnet ist, wobei ein Kontaktelement der Art an dem Handbetätigungselement angeordnet ist oder von dem Handbetätigungselement betätigbar ist, dass es in Schließ- und Verriegelungsstellung mit dem Sensor der Sensoreinheit zusammenwirkt.

Die Außenseite einer Sattelkupplung oder einer Verschiebeeinrichtung meint einen geeigneten Ort, der von außen leicht einsehbar ist, so dass die Anzeigeeinrichtung beim Vorbeigehen am Fahrzeug ohne weiteres erkennbar ist. Die Anordnung an oder in der Nähe eines Handbetätigungselementes bietet den Vorteil, dass es sich hier um einen Ort handelt, der ohnehin für den Fahrer zugänglich sein muss, weil er das Handbetätigungselement beispielsweise zum Verriegeln einer Sattelkupplung betätigen muss. Derartige Orte sind leicht einsehbar, so dass dort die Vorrichtung bzw. deren Anzeigeeinrichtung mühelos erkennbar ist.

Das Handbetätigungselement kann ein Zuggriffhebel oder ein Sicherungshebel eines Zuggriffhebels sein.

Als Kontaktelement ist eine Metallplatte oder ein Magnet bevorzugt, die an dem Handbetätigungselement befestigt sind. Durch eine Bewegung des Handbetätigungselementes wird dieses Kontaktelement in dem Bereich des Sensors der Vorrichtung bewegt bzw. vom Sensor entfernt, so dass zwei unterschiedliche Stellungen des Handbetätigungselementes und damit auch der damit verbundenen Verriegelungseinrichtung detektiert werden kann.

Das Kontaktelement kann auch auf einem Schwenkelement angeordnet sein, das ein Handbetätigungselement ist. Ein solches Handbetätigungselement dient beispielsweise als Verriegelungselement für einen Zuggriffhebel, mit dem die Verschlusseinrichtung einer Sattelkupplung betätigt wird. Das Kontaktelement wirkt mit dem Sensor der Vorrichtung zusammen, wenn es in den Bereich des Sensors verschwenkt wird.

Die erfindungsgemäße Vorrichtung kann auch an der Außenseite einer Bolzenkupplung benachbart zum Kupplungsbolzen angeordnet sein, der in Schließstellung mit dem Sensor der Sensoreinheit zusammenwirkt.

Der Sensor weist bei dieser Ausführung ein Schaltelement auf, das vom Kupplungsbolzen betätigbar ist. Dieses Schaltelement ist mit der Sensoreinheit in der Weise verknüpft, dass aus der Position des Schaltelementes auf den Verschlusszustand der Bolzenkupplung geschlossen werden kann.

Eine weitere Anordnung der Vorrichtung sieht die Anbringung an der Außenseite einer Verschiebeeinrichtung, die eine Zahnleiste und auf einem eine Sattelkupplung tragenden Schlitten Blockierstücke aufweist, und benachbart zu einem Blockierstück vor, das in Verriegelungsstellung mit dem Sensor der Sensoreinheit zusammenwirkt. Es ist mit der Vorrichtung möglich, an Ort und Stelle die exakte Position der Verschiebeeinrichtung, d. h. des Schlittens anzuzeigen. Zu diesem Zweck kann die Anzeigeeinrichtung mehrere Anzeigeelemente oder auch eine digitale oder analoge Anzeige aufweisen, die die Position beispielsweise in Zentimetern von einem Fixpunkt angibt.

Beispielhafte Ausführungsformen der Erfindung werden nachfolgend anhand der Zeichnungen näher erläutert. Es zeigen:
- Figur 1: eine schematische Darstellung der erfindungsgemäßen Vorrichtung,
- Fign. 2+3: die Anordnung der erfindungsgemäßen Vorrichtung an einer Sattelkupplung gemäß einer ersten Ausführungsform,
- Fign. 4+5: die Anordnung der erfindungsgemäßen Vorrichtung an einer Sattelkupplung gemäß einer zweiten Ausführungsform,
- Fign. 6+7: die Anordnung an einer Sattelkupplung gemäß einer dritten Ausführungsform,
- Figur 8: die Anordnung der Vorrichtung an einer Bolzenkupplung,
- Fign. 9a+9b: eine vergrößerte schematische Darstellung der Vorrichtung an einer Bolzenkupplung,
- Fign. 10+11: die Anordnung der erfindungsgemäßen Vorrichtung an einer Verschiebeeinrichtung.

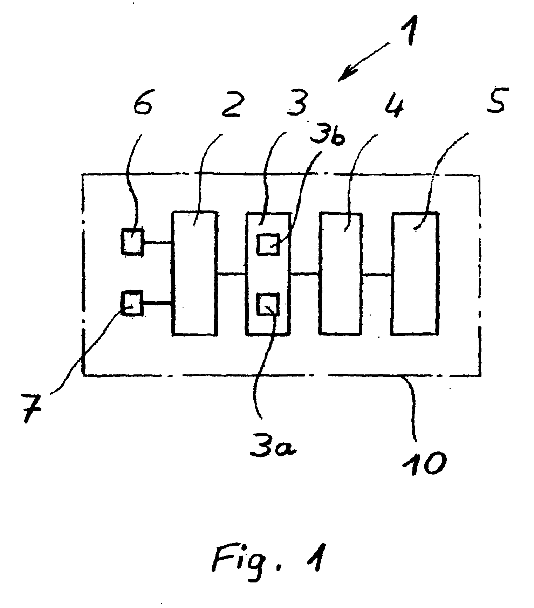

In der Figur 1 ist die erfindungsgemäße Vorrichtung 1 schematisch dargestellt. In einem gestrichelt dargestellten Gehäuse 10 sind eine Sensoreinheit 3 mit Sensoren 3a, 3b eine Anzeigeeinheit 2, eine Auswerteeinheit 4, eine Spannungsquelle 5 und Anzeigeelemente 6 und 7 untergebracht, die mit der Anzeigeeinheit 2 verbunden sind. Alle Einheiten sind an die Spannungsquelle 5 angeschlossen und teilweise auch miteinander verbunden, was nur schematisch in der Figur 1 dargestellt ist. Die dargestellte Vorrichtung 1 enthält sowohl ein akustisches Anzeigeelement 6 als auch ein optisches Anzeigeelement 7.

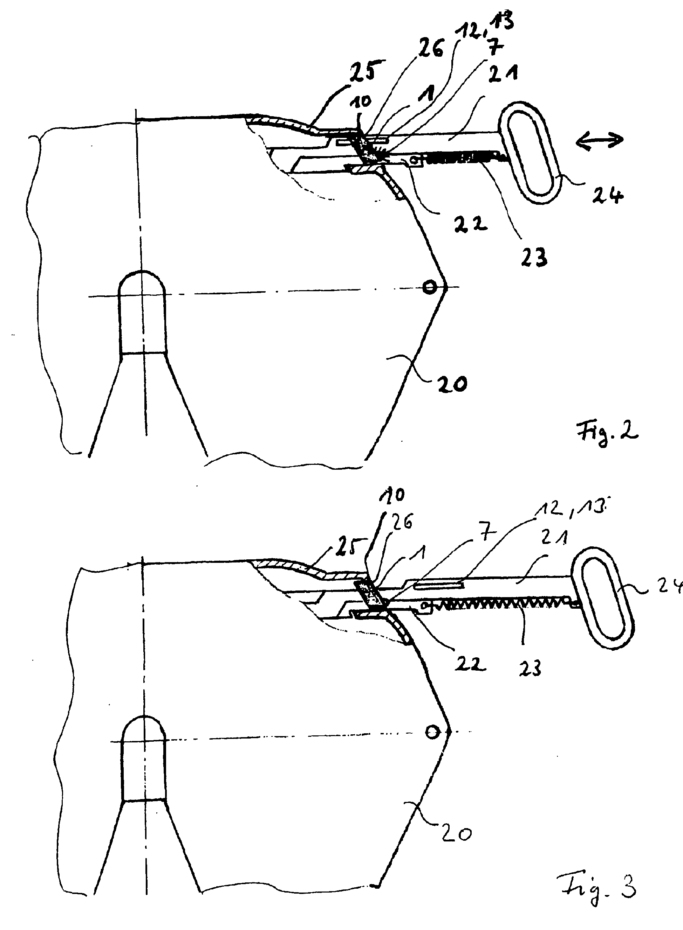

In der Figur 2 ist die Anordnung einer solchen Vorrichtung 1 an einer Sattelkupplung 20 dargestellt. Die Seitenwand 25 einer Kupplungsplatte weist eine Durchführungsöffnung 26 auf, um den Zuggriffhebel 21 nach außen zu führen. Dieser Zuggriffhebel 21 ist über ein Gestänge mit einer Verschlusseinrichtung für den Königszapfen verbunden, was in der hier gezeigten Darstellung nicht zu sehen ist.

Der Zuggriffhebel 21 besitzt einen Griff 24, mit dem der Zuggriffhebel in Pfeilrichtung bewegt werden kann. Benachbart zum Zuggriffhebel 21 ist ein Sicherungshebel 22 angeordnet, der sich ebenfalls nach außen durch die Öffnung 26 erstreckt und mittels einer Feder 23 im Bereich des Griffs 24 verbunden ist.

In der Durchführungsöffnung 26 ist die Vorrichtung 1 angeordnet, wobei der Sensor der Vorrichtung 1 an der Unterseite des Gehäuses 10 vorgesehen ist und daher nicht sichtbar ist. Da sich der Zuggriffhebel 21 unter der Vorrichtung 1 befindet, besitzt dieser vorzugsweise an seiner Oberseite ein Kontaktelement 12 in Form einer Metallplatte 13. Anstelle einer Metallplatte kann auch ein Magnet verwendet werden. In der Figur 2 befindet sich diese Metallplatte unter dem Sensor. Dies ist die Stellung, in der die Verschlusseinrichtung sich in Verschlussstellung und der Zuggriffhebel 21 sich in seiner Sicherungsstellung befindet.

Durch Herausziehen des Zuggriffhebels 21 wird dieser in eine Position bewegt, die es ermöglicht, den Zuggriffhebel auch seitlich zu versetzen und die Verschlusseinrichtung des Königszapfens zu öffnen. Hierbei wird das Kontaktelement 12 von der Vorrichtung 1 und somit vom Sensor wegbewegt, was durch die Anzeigeeinrichtung kenntlich gemacht werden kann.

In den Figuren 2 und 3 ist vorgesehen, dass die Anzeigeeinrichtung ein optisches Anzeigeelement 7 aufweist, das leuchtet, wenn die Verschlussstellung vorliegt (Figur 2) und erlischt, wenn der Zuggriffhebel in die Öffnungsstellung bewegt wird (Figur 3). Das optische Anzeigeelement 7 ist seitlich am Gehäuse 10 angebracht und somit von der Bedienungsseite her sichtbar.

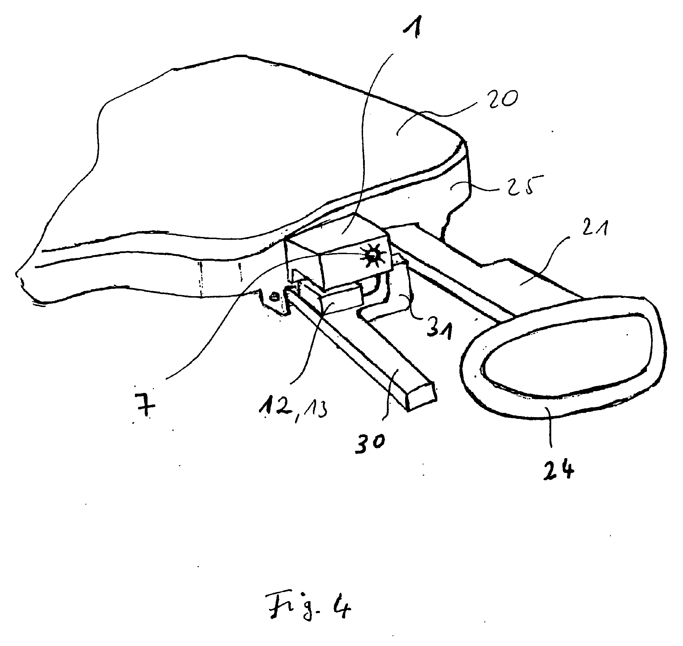

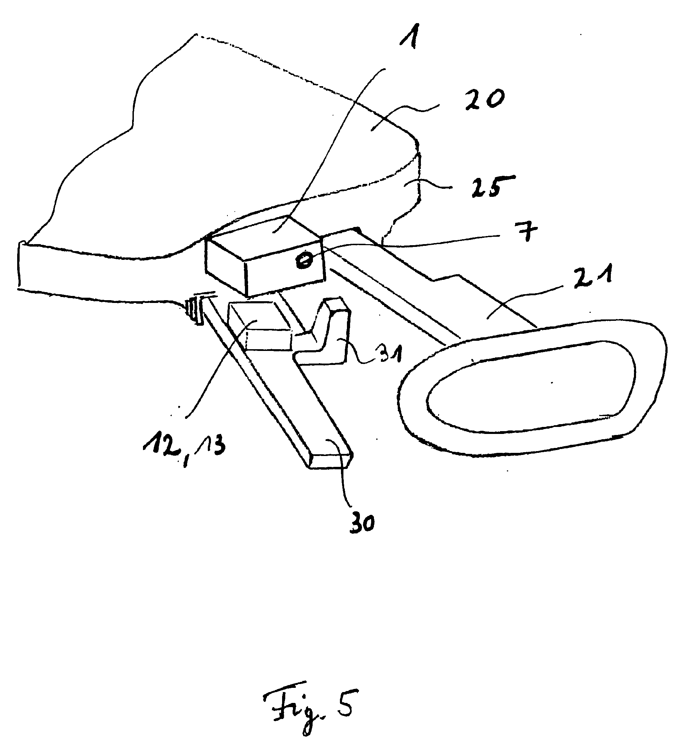

In der Figur 4 ist eine weitere Ausführungsform dargestellt. Auch in dieser Ausführung ist die Vorrichtung 1 an der Umfangswand 25 an der Sattelkupplungsplatte 20 angeordnet. Der Sicherungshebel 30 ist ein separater Hebel, der nicht mit dem Zuggriffhebel 21 verbunden ist. Auf der Oberseite des Sicherungshebels 30 ist das Kontaktelement 12 ebenfalls in Form einer Metallplatte 13 angeordnet. Bevor der Zuggriffhebel 21 bewegt werden kann, muss zuvor der Sicherungshebel 30 verschoben werden, wie dies in der Figur 5 dargestellt ist. Erst danach ist es möglich, den Zuggriffhebel 21 zum Öffnen der Verschlusseinrichtung über den Sicherungshaken 31 am Sicherungshebel 30 zu bewegen.

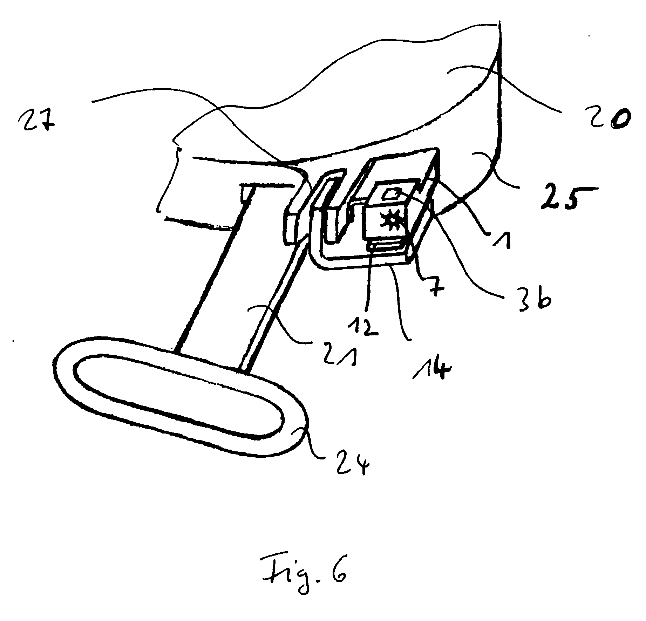

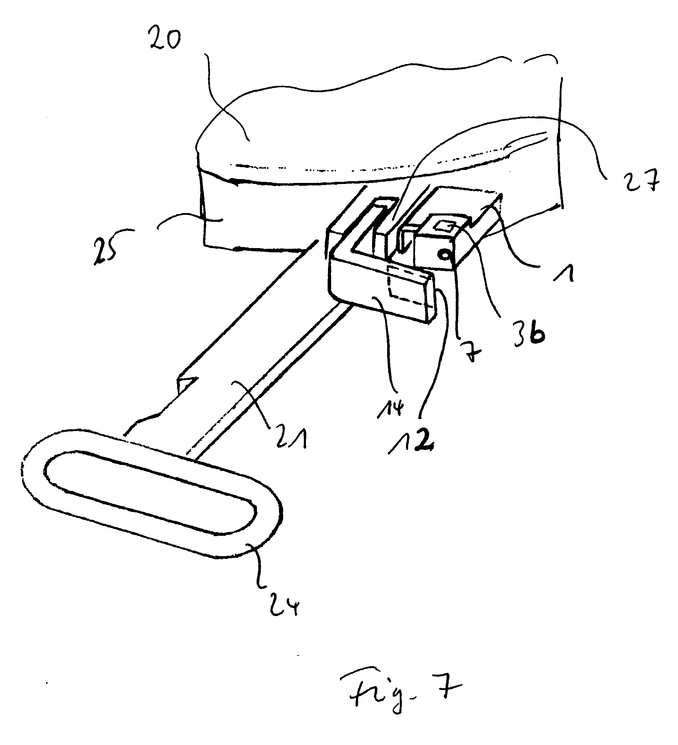

In den Figuren 6 und 7 ist eine weitere Ausführungsform dargestellt. An der Umfangswand 25 der Sattelkupplung 20 ist eine Schwenklagerung 27 vorgesehen, in der ein Schwenkhebel 14 mit einem darauf befestigten Kontaktelement 12 gelagert ist und somit den Zugriffhebel 21 sichert. Oberhalb des Schwenkhebels 14 ist die erfindungsgemäße Vorrichtung 1 angeordnet, die an der Unterseite den Sensor aufweist. In der in Figur 6 gezeigten Position befindet sich der Zuggriffhebel 21 und damit die Verschlusseinrichtung in Schließposition. Dementsprechend leuchtet die optische Anzeige 7 auf.

Bevor der Zugriffhebel 21 zum Öffnen des Verschlusses bewegt werden kann, muss der Schwenkhebel 14 in der Schwenklagerung 27 um 90° verschwenkt werden, so dass der betreffende Schenkel des Schwenkhebels vom Sensor der Sensoreinrichtung der Vorrichtung 1 entfernt wird. Die Vorrichtung 1 erkennt dadurch die Offenstellung und das Anzeigeelement 7 erlischt.

In den Figuren 6 und 7 ist ferner ein Abstandssensor 3b zu sehen, der an der Oberseite des Gehäuses angeordnet ist und den Abstand zu einem aufgesattelten Auflieger (nicht dargestellt) detektiert.

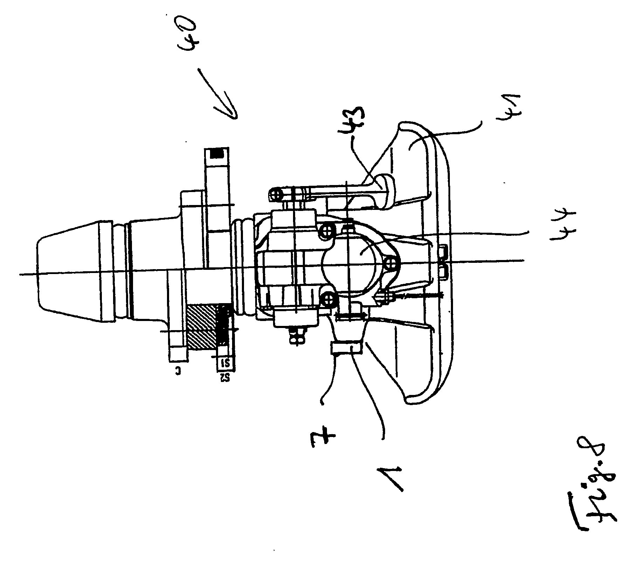

In der Figur 8 ist eine Bolzenkupplung 40 dargestellt, die ein Kupplungsgehäuse 41 aufweist, in das das vordere Ende beispielsweise einer Deichsel eingeführt werden kann. Im Gehäuse befindet sich eine Öffnung für den Kupplungsbolzen 44, der in senkrechter Richtung verschoben werden kann. Hierzu ist der Hebel 43 vorgesehen.

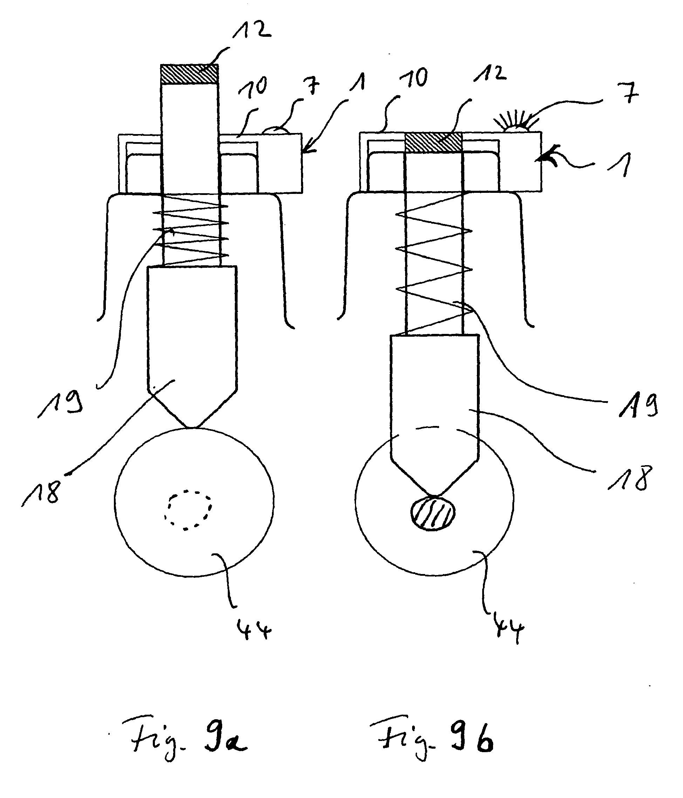

An der linken Seite des Kupplungsgehäuses 41 ist die erfindungsgemäße Vorrichtung 1 mit dem Anzeigeelement 7 angeordnet. Die Funktionsweise wird in den Figuren 9a und 9b dargestellt.

Die Vorrichtung 1 besitzt ein mechanisches Schaltelement in Form eines Sicherungsbolzens 18 mit dem Kontaktelement 12 an seinem freien Ende, der federgelagert am Gehäuse 1 angeordnet ist und sich durch das Gehäuse 10 nach außen erstreckt. Figur 9a zeigt die geöffnete Stellung des Kupplungsbolzens 44. Figur 9b zeigt die geschlossene Stellung, in der der Kupplungsbolzen 44 relativ zum Sicherungsbolzen 18 verschoben steht, so dass der Sicherungsbolzen 18, angetrieben durch die Druckfeder 19, in eine Vertiefung im Kupplungsbolzen 44 eintaucht. Außer anhand des optischen Anzeigeelements 7 ist auch anhand der Position des Sicherungsbolzens 18 die jeweilige Stellung erkennbar, wie ein Vergleich der Figuren 9a und 9b zeigt. Es ist dadurch möglich, die Verriegelungsposition des Kupplungsbolzens 44 zu detektieren.

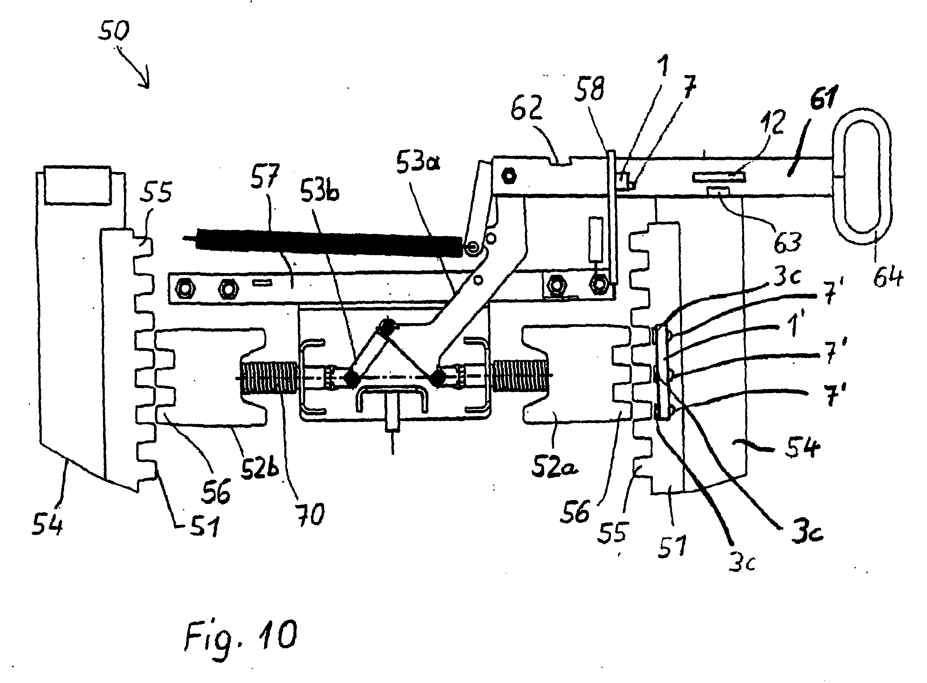

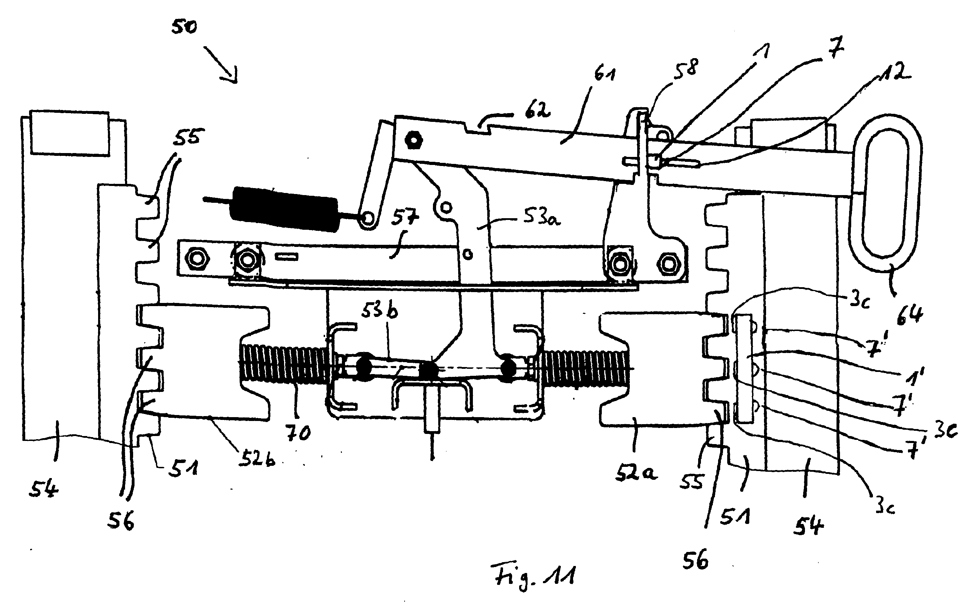

In den Figuren 10 und 11 ist eine Verschiebeeinrichtung 50 dargestellt. Auf einem Zugfahrzeug (nicht dargestellt) sind parallel zueinander angeordnete Führungsschienen 54 mit Zahnleisten 51 und Zähnen 55 befestigt. Die Zähne 55 sind nach innen weisend angeordnet und liegen in einer gemeinsamen Ebene.

Auf den Führungsschienen 54 ist ein Schlitten 70 verschiebbar angeordnet, dessen Rahmen in den Figuren 10 und 11 nicht dargestellt ist.

Auf dem Schlitten ist eine Verriegelungseinrichtung mit Blockierstücken 52a,b angeordnet, die über Hebel 53a,b mit einem Zuggriffhebel 61 verbunden sind. Mittels des Zuggriffhebels 61 werden diese Blockierstücke 52a,b von einer entriegelten Position (Figur 10) in eine verriegelte Position (Figur 11) verschoben und umgekehrt. An einem Wandelement 58, durch das der Zuggriffhebel 61 geführt wird, ist die erfindungsgemäße Vorrichtung 1 angeordnet. Auf der Oberseite des Zuggriffhebels 61 ist ein Kontaktelement 12 angeordnet. In der Figur . 10, die die entriegelte Stellung zeigt, ist der Zuggriffhebel 61 mit seiner Rastausnehmung 62 an dem Wandelement 58 fixiert. Die Kontaktplatte 12 ist außerhalb der Vorrichtung 1 angeordnet, so dass die Vorrichtung 1 die entriegelte Position detektiert.

Wenn, wie in Figur 11 dargestellt ist, der Zuggriffhebel 61 eingeschoben wird und die Blockierstücke 52a,b ihre Verriegelungsposition einnehmen, wird das Kontaktelement 12 unter die Vorrichtung 1 bewegt, so dass diese mit der Sensoreinheit die Verriegelungsstellung detektieren kann. Über die optische Anzeige 7 wird ein entsprechendes Signal angezeigt.

In den Figuren 10 und 11 ist an der Zahnleiste 51 eine erfindungsgemäße Vorrichtung 1' angeordnet, die innenliegend drei Positionssensoren 3c aufweist und außenliegend drei optische Anzeigen 7' besitzt. Beim Eingreifen der Zähne 56 des Blockierstücks 52a in die Lücken zwischen den Zähnen 55 der Zahnleiste 51 werden diese von den Positionssensoren 3c detektiert. Wenn der Schlitten 70 verschoben wird, ändert sich auch die Position der Blockierstücke 52a,b, so dass nicht alle Zähne 56 des Blockierstücks 52a einem Positionssensor 3c gegenüberliegt. Je nachdem, ob nur ein Sensor 3c zwei oder alle drei Sensoren 3c Zähne 56 detektieren, leuchten auch dementsprechend die optischen Anzeigeelemente 7' auf. Anhand der Anzahl der aufleuchtenden Anzeigenelemente kann der Fahrer beim Vorübergehen erkennen, in welcher Position sich der Schlitten der Verschiebeeinrichtung befindet.

### Bezugszeichenliste

- 1, 1': Vorrichtung
- 2: Anzeigeeinheit
- 3: Sensoreinheit
- 3a: Sensor
- 3b: Sensor (Abstandssensor)
- 3c: Sensor (Positionssensor)
- 4: Auswerteeinheit
- 5: Spannungsquelle
- 6: akustisches Anzeigeelement
- 7: optisches Anzeigeelement

- 10: Gehäuse
- 12: Kontaktelement
- 13: Metallplatte
- 14: Schwenkelement
- 17: Schaltelement
- 18: Sicherungsbolzen
- 19: Druckfeder

- 20: Sattelkupplung
- 21: Zuggriffhebel
- 22: Sicherungshebel
- 23: Feder
- 24: Griff
- 25: Umfangswand
- 26: Öffnung
- 27: Schwenklager

- 30: Sicherungshebel

- 31: Sicherungshaken

- 40: Bolzenkupplung
- 41: Kupplungsgehäuse
- 43: Sicherungshebel
- 44: Kupplungsbolzen

- 50: Verschiebeeinrichtung
- 51: Zahnleiste
- 52a,b: Blockierstück
- 53a,b: Hebel
- 54: Führungsschiene
- 55: Zahn
- 56: Zahn
- 57: Feder
- 58: Wandelement

- 61: Zuggriffhebel
- 62: Rastausnehmung
- 63: Rastanordnung
- 64: Griff
- 65:
- 66: Zahn

- 70: Schlitten

## Patentansprüche

1. Anordnung einer Vorrichtung (1, 1') zum Nachweis und zum Anzeigen der Position von Komponenten von Fahrzeugkupplungen an einer Sattelkupplung (20), wobei die Vorrichtung (1, 1') mindestens einen Sensor (3a, 3b) und mindestens ein Anzeigeelement (6, 7) sowie eine eigene Spannungsquelle (5) umfasst, und ein Kontaktelement (12) derart an einem Handbetätigungselement angeordnet ist, oder von einem Handbetätigungselement betätigbar ist, dass es in Schließ- oder Verriegelungsstellung mit dem Sensor (3a) zusammenwirkt,
**dadurch gekennzeichnet,**
**dass** der mindestens eine Sensor (3a, 3b), das mindestens eine Anzeigeelement (6, 7) und die Spannungsquelle (5) in einem gemeinsamen Gehäuse (10) einer kombinierten Sensor- und Anzeigeeinheit (2, 3) angeordnet sind, welche an der Außenseite der Sattelkupplung (20) benachbart zu dem Handbetätigungselement einer Verschluss- oder Verriegelungseinrichtung angeordnet ist.

2. Anordnung nach Anspruch 1, **dadurch gekennzeichnet, dass** das Handbetätigungselement ein Zuggriffhebel (21, 61) oder ein Sicherungshebel (22) eines Zuggriffshebels (21) ist.

3. Anordnung nach Anspruch 1 oder 2, **dadurch gekennzeichnet, dass** Kontaktelement (12) eine Metallplatte (13) oder ein Magnet ist, die oder der an dem Handbetätigungselement befestigt ist.

4. Anordnung nach einem der Ansprüche 1 bis 3, **dadurch gekennzeichnet, dass** das Handbetätigungselement ein Schwenkelement (14) ist, auf dem das Kontaktelement (12) angeordnet ist.

5. Anordnung nach einem der Ansprüche 1 bis 4, **dadurch gekennzeichnet, dass** die kombinierte Sensor- und Anzeigeeinheit (2, 3) eine elektronische Auswerteeinheit (4) aufweist.

6. Anordnung nach einem der Ansprüche 1 bis 5, **dadurch gekennzeichnet, dass** mindestens ein Abstandssensor (3b) vorgesehen ist.

7. Anordnung nach einem der Ansprüche 1 bis 6, **dadurch gekennzeichnet, dass** der Sensor (3a, 3b, 3c) berührungslos arbeitet.

8. Anordnung nach einem der Ansprüche 1 bis 7, **dadurch gekennzeichnet, dass** der Sensor (3a, 3b, 3c) ein elektromagnetischer Sensor ist.

9. Anordnung nach einem der Ansprüche 1 bis 8, **dadurch gekennzeichnet, dass** der Sensor (3a) ein Schaltelement (17) aufweist.

10. Anordnung nach einem der Ansprüche 1 bis 9, **dadurch gekennzeichnet, dass** die Anzeigeeinheit (2) ein am Gehäuse (10) angeordnetes optisches Anzeigeelement (7) aufweist.

11. Anordnung nach einem der Ansprüche 1 bis 10, **dadurch gekennzeichnet, dass** die Anzeigeeinheit (2) ein akustisches Anzeigeelement (6) aufweist.

12. Anordnung nach einem der Ansprüche 1 bis 11, **dadurch gekennzeichnet, dass** die Anzeigeeinheit (2) ein mechanisches Anzeigeelement aufweist.

## Claims

1. Arrangement of a device (1, 1') for detecting and displaying the position of components of vehicle couplings on a fifth wheel (20), the device (1, 1') comprising at least one sensor (3a, 3b) and at least one display element (6, 7) and a separate voltage source (5), and a contact element (12) being arranged on a manual actuation element or being able to be operated by a manual actuation element in such a manner that it co-operates with the sensor (3a) in a closure or locking position,
**characterised in that**,
the at least one sensor (3a, 3b), the at least one display element (6, 7) and the voltage source (5) are arranged in a common housing (10) of a combined sensor and display unit (2, 3) which is arranged at the outer side of the fifth wheel (20) adjacent to the manual actuation element of a closure or locking device.

2. Arrangement according to claim 1, **characterised in that** the manual actuation element is a pull lever (21, 61) or a securing lever (22) of a pull lever (21).

3. Arrangement according to claim 1 or claim 2, **characterised in that** the contact element (12) is a metal plate (13) or a magnet which is secured to the manual actuation element.

4. Arrangement according to any one of claims 1 to 3, **characterised in that** the manual actuation element is a pivot element (14), on which the contact element (12) is arranged.

5. Arrangement according to any one of claims 1 to 4, **characterised in that** the combined sensor and display unit (2, 3) has an electronic evaluation unit (4).

6. Arrangement according to any one of claims 1 to 5, **characterised in that** at least one spacing sensor (3b) is provided.

7. Arrangement according to any one of claims 1 to 6, **characterised in that** the sensor (3a, 3b, 3c) operates in a contactless manner.

8. Arrangement according to any one of claims 1 to 7, **characterised in that** the sensor (3a, 3b, 3c) is an electromagnetic sensor.

9. Arrangement according to any one of claims 1 to 8, **characterised in that** the sensor (3a) has a switching element (17).

10. Arrangement according to any one of claims 1 to 9, **characterised in that** the display unit (2) has an optical display element (7) which is arranged on the housing (10).

11. Arrangement according to any one of claims 1 to 10, **characterised in that** the display unit (2) has an acoustic display element (6).

12. Arrangement according to any one of claims 1 to 11, **characterised in that** the display unit (2) has a mechanical display element.

## Revendications

1. Agencement d'un dispositif (1, 1') de repérage et d'indication de l'emplacement d'éléments constitutifs d'attelages de véhicules sur une sellette d'accouplement (20), ledit dispositif (1, 1') comprenant au moins un capteur (3a, 3b) et au moins un élément d'indication (6, 7), ainsi qu'une propre source de tension (5), sachant qu'un élément de contact (12) est disposé sur un élément d'actionnement manuel, ou peut être manoeuvré par un élément d'actionnement manuel, de façon telle qu'il coopère avec le capteur (3a) en position de fermeture ou de verrouillage,
**caractérisé par le fait**
**que** le capteur (3a, 3b) prévu au minimum, l'élément d'indication (6, 7) prévu au minimum, et la source de tension (5) sont logés dans un boîtier commun (10) d'une unité combinée (2, 3) de détection et d'indication occupant, à la face extérieure de la sellette d'accouplement (20), une position voisine de l'élément d'actionnement manuel d'un système de fermeture ou de verrouillage.

2. Agencement selon la revendication 1, **caractérisé par le fait que** l'élément d'actionnement manuel est une poignée de traction (21, 61), ou un levier d'arrêt (22) d'une poignée de traction (21).

3. Agencement selon la revendication 1 ou 2, **caractérisé par le fait que** l'élément de contact (12) est une platine métallique (13) ou un aimant, fixé(e) à l'élément d'actionnement manuel.

4. Agencement selon l'une des revendications 1 à 3, **caractérisé par le fait que** l'élément d'actionnement manuel est un élément pivotant (14) sur lequel l'élément de contact (12) est implanté.

5. Agencement selon l'une des revendications 1 à 4, **caractérisé par le fait que** l'unité combinée (2, 3) de détection et d'indication comporte une unité d'interprétation (4).

6. Agencement selon l'une des revendications 1 à 5, **caractérisé par** la présence d'au moins un capteur d'espacements (3b).

7. Agencement selon l'une des revendications 1 à 6, **caractérisé par le fait que** le capteur (3a, 3b, 3c) opère sans contact.

8. Agencement selon l'une des revendications 1 à 7, **caractérisé par le fait que** le capteur (3a, 3b, 3c) est un capteur électromagnétique.

9. Agencement selon l'une des revendications 1 à 8, **caractérisé par le fait que** le capteur (3a) présente un élément de commutation (17).

10. Agencement selon l'une des revendications 1 à 9, **caractérisé par le fait que** l'unité indicatrice (2) comporte un élément (7) d'affichage optique, disposé sur le boîtier (10).

11. Agencement selon l'une des revendications 1 à 10, **caractérisé par le fait que** l'unité indicatrice (2) comporte un élément (6) de repérage acoustique.

12. Agencement selon l'une des revendications 1 à 11, **caractérisé par le fait que** l'unité indicatrice (2) comporte un élément de visualisation mécanique.
